# EUROPEAN PATENT APPLICATION

(11) **EP 4 528 887 A1**
(43) Date of publication of application: **26.03.2025**
(21) Application number: 23806779.7
(22) Date of filing: 10.05.2023
(51) Int. Cl.: H01M 10/617, H01M 10/613, H01M 10/656, H01M 10/60, F28D 20/00

(54) **BATTERY PACK THERMAL MANAGEMENT SYSTEM**

(30) Priority: 18.05.2022 US 202263343423 P
(71) Applicant: T-Global Technology Co., Ltd., Taoyuan, Taiwan 330058 (TW)
(72) Inventor: LIN, Wei-Keng, Taoyuan City, Taiwan 330058 (TW); WU, Hsin-Ming, Taoyuan City, Taiwan 330058 (TW); CHENG, Weng-Liang, Taoyuan City, Taiwan 330058 (TW); HSIAO, Yung-chin, Taoyuan City, Taiwan 330058 (TW); HSIAO, Ming-Hsien, Taoyuan City, Taiwan 330058 (TW)
(74) Representative: Laddé, Jurre Gerard
(86) International application number: PCT/CN2023/093152
(87) International publication number: WO 2023/221827

(57) **Abstract**

The invention provides a thermal managing system for a battery pack to prevent the thermal run away, comprising: a battery pack comprising a heat conducting shell; a vapor chamber module, comprising a evaporating surface and a condensing surface, wherein the evaporating surface is thermally connected to a corresponding area of the heat conducting shell, and a two-phase flow heat transfer between the evaporating surface and the condensing surface occurs in a direction one-way outwardly from the evaporating surface to the condensing surface; a phase change material module, comprising a container and a phase change material, wherein the container is thermally connected to the condensing surface and contains the phase change material, wherein when a phase change occurs, the phase change material comprises a latent heat, wherein the phase change material is capable of being heated by the two-phase flow heat transfer, wherein when the phase change material is melting, conducting dominates heat transferring rather than circulating.

## Description

### BACKGROUND OF THE INVENTION

### 1. Field of the Invention

The present invention relates to a thermal managing system, particularly to a thermal managing system for a battery pack.

### 2. Description of the Prior Art

The conventional thermal managing system adopting only the phase change materials to prevent the battery pack from thermal run away by directly attaching the phase change materials to the shell of the battery pack.

### SUMMARY OF THE INVENTION

The invention provides a thermal managing system for a battery pack for preventing the thermal run away, comprising: a battery pack comprising a heat conducting shell; a vapor chamber module, comprising a evaporating surface and a condensing surface, wherein the evaporating surface is thermally connected to a corresponding area of the heat conducting shell, and a two-phase flow heat transfer between the evaporating surface and the condensing surface occurs in a direction one-way from the evaporating surface outwardly to the condensing surface; a phase change material module, comprising a container and a phase change material, wherein the container is thermally connected to the condensing surface and contains the phase change material, wherein when a phase change occurs, the phase change material comprises a latent heat, wherein the phase change material is capable of being heated by the two-phase flow heat transfer, wherein when the phase change material is melting, conducting dominates heat transferring rather than circulating

### BRIEF DESCRIPTION OF THE DRAWINGS

The invention as well as a preferred mode of use and advantages thereof will be best understood by referring to the following detailed description of an illustrative embodiment in conjunction with the accompanying drawings, wherein:

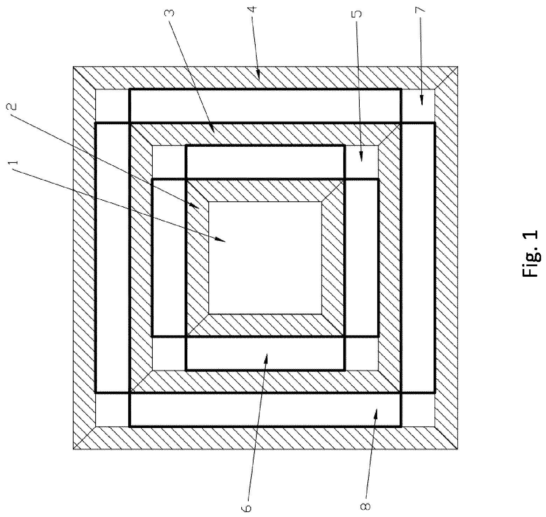

FIG. 1 illustrates a top view of an embodiment of the invention, a thermal managing system for a battery pack.

### DETAILED DESCRIPTION OF THE PREFERRED EMBODIMENTS

Referring to Fig. 1, a top view of an embodiment of the invention, a thermal managing system for a battery pack is provided. A battery pack 1 is thermally connected to an evaporating surface of the first vapor chamber (VC) module 2. The second VC module 3 is disposed to be parallel to the first VC module 2, and the first gap 5 is formed between the first VC module 2 and the second VC module 3. The first phase change material (PCM) module 6 is disposed in the first gap 5. The third VC module 4 is disposed to be parallel to the second VC module 3, and the second gap 7 is formed between the second VC module 3 and the third VC module 4. The second PCM module 8 is disposed in the second gap 7. Two subjects are thermally connected for heat exchange or transferring heat energy. They may be adhesive to each other, bonded together, or in a detachable connection.

In an embodiment, the battery pack 1 comprises an aluminum heat conducting shell. Any lateral surface of the heat conducting shell may be thermally connected to one or multiple first VCs. The first VC module 2 comprises the first VC and a supporting plate. One side of the supporting plate is thermally connected to the evaporating surface of the first VC through the thermal interface material (TIM), and the other side is thermally connected to the corresponding area of the heat conducting shell. In an embodiment, the thermal managing system comprises a set of supporting columns as the supporting framework, and the supporting plate is secured to the supporting column. In an embodiment, a supporting plate is thermally connected to one or multiple pieces of the first VC.

The first VC comprises an evaporating surface and a condensing surface, parallel to each other. A two-phase flow heat transfer, comprising the liquid phase and the gas phase, can occur from the evaporating surface to the condensing surface, outward away from the battery pack 1. In an embodiment, the heat transfer direction of the two-phase flow heat transfer is parallel to the ground earth. In an embodiment, the thermal conductivity of the VC is 4533 W/mK through the two-phase flow heat transfer. In an embodiment, the condensing surface of the first VC module 2 comprises the condensing surfaces of multiple pieces of the first VC, and the evaporating surface of the first VC module 2 comprises multiple supporting plates thermally connected to the evaporating surfaces of multiple pieces of the first VC.

In an embodiment, the battery pack 1 is in an abnormal situation. A small area of the heat conducting shell occurs the high-flux heat dissipation. Through the two-phase flow heat transfer in the first VC module 2, the high-flux heat dissipation in a small area is transformed to the low-flux heat dissipation evenly output from a bigger condensing surface area.

In an embodiment, the first PCM module 6 comprises a first container with a metal shell in aluminum, and the first PCM is contained in the first container. In an embodiment, the first PCM comprises the composite paraffin wax, and the melting point is 45°C, from the solid phase to the liquid phase. During the phase change, the massive latent heat is absorbed through a higher heat transfer rate, but the temperature rises just a little bit. In an embodiment, one gram of the composite paraffin wax at the melting point of 45°C can absorb heat energy almost 200 joules.

In an embodiment, to enhance to melting rate of the composite paraffin wax, the nano or micro particles with high thermal conductivity or metal foam are added to the composite paraffin wax. In an embodiment, the first container comprises heat conducting fins to enhance to melting rate of the composite paraffin wax. In an embodiment, any combination of the above methods is used to enhance to melting rate of the composite paraffin wax. In an embodiment, the first container comprises a polymer shell, immersing in the working fluid, such as water, sealed in another heat conducting container. The first container is thermally connected to the first condensing surface through the water and another heat conducting container.

In an embodiment, when the first PCM is melting, the solid-liquid interface profile is almost a straight line, and meanwhile, the conducting dominates the heat transfer rather than circulating in the direction of the two-phase flow heat transfer. In an embodiment, when the outward heat transfer distance of the first PCM is less than 1cm, the solid-liquid interface profile is almost a straight line during the phase change.

In an embodiment, the heat dissipated from the heat conducting shell of the battery pack 1 is evenly output from the bigger condensing surface by transforming the high-flux heat in a small area into the low-flux heat, through the two-phase flow heat transfer. Afterwards, the first PCM is evenly heated through the first container to be in the phase change state, for absorbing the abnormal dissipated heat from the battery pack1 as the latent heat of the first PCM to reduce the temperature of the battery pack 1. The heat transfer rate, or the thermal conductivity, of the two-phase flow heat transfer can be more than ten times of the metal, which is very helpful for enhancing the melting rate of the first PCM. Meanwhile, the impact to the first container due to the volume expansion is reduced to increase the service life of the first container. In an embodiment, the first VC module 2 may work as a thermal rectifier to temporarily isolate the latent heat of the first PCM from the battery pack 1.

In an embodiment, the second VC module 3 is similar to that of the first VC module 2, except the two-phase flow heat transfer in the second VC module 3 releases the first latent heat of the first PCM outwardly away from the battery pack 1. In addition, the second evaporating surface of the second VC module 3 is thermally connected to the first container, and the second condensing surface of the second VC module 3 is thermally connected to the second container of the second PCM module 8. In an embodiment, the second VC module 3 can enhance the solidification of the first PCM for shortening the time recovered back to the initial state of the phase change as soon as possible.

In an embodiment, the function of the second PCM module 8 is similar to that of the first PCM module 6, except the melting point of the second PCM is lower than that of the first PCM, for example at 40°C. In addition, the second PCM may absorb the second latent heat released from the two-phase flow heat transfer in the second VC through the second container. In an embodiment, the topmost of the second PCM starts melting before the topmost of the first PCM completes its melting.

In an embodiment, the function of the third VC module 4 is similar to that of the second VC module 3, except the two-phase flow heat transfer in the third VC may release the second latent heat from the second PCM for protecting the battery pack 1 from the temperature rising hazard. In addition, the third VC module 4 is thermally connected to the second container.

In an embodiment, a battery pack 1 is thermally connected to an evaporating surface of the first vapor chamber (VC) module 2. The second VC module 3 is disposed to be parallel to the first VC module 2, and the first gap 5 is formed between the first VC module 2 and the second VC module 3. The first phase change material

(PCM) module 6 is disposed in the first gap 5. The second PCM module 8 is thermally connected to the second condensing surface of the second VC module 3.

In an embodiment, a battery pack 1 is thermally connected to an evaporating surface of the first vapor chamber (VC) module 2. The second VC module 3 is disposed to be parallel to the first VC module 2, and the first gap 5 is formed between the first VC module 2 and the second VC module 3. The first phase change material (PCM) module 6 is disposed in the first gap 5.

In an embodiment, a battery pack 1 is thermally connected to an evaporating surface of the first vapor chamber (VC) module 2. The first PCM module 6 is thermally connected to the condensing surface of the first VC module 2.

## Claims

1. A thermal managing system for a battery pack, comprising:
a battery pack comprising a heat conducting shell;
a vapor chamber module, comprising a evaporating surface and a condensing surface, wherein the evaporating surface is thermally connected to a corresponding area of the heat conducting shell, and a two-phase flow heat transfer between the evaporating surface and the condensing surface occurs in a direction one-way outwardly from the evaporating surface to the condensing surface;
a phase change material module, comprising a container and a phase change material, wherein the container is thermally connected to the condensing surface and contains the phase change material, wherein when a phase change occurs, the phase change material comprises a latent heat,
wherein the phase change material is capable of being heated by the two-phase flow heat transfer,
wherein when the phase change material is melting, conducting dominates heat transferring rather than circulating.

2. The thermal managing system for a battery pack as in claim 1, wherein the vapor chamber module comprises a vapor chamber and a supporting plate.

3. The thermal managing system for a battery pack as in claim 1, wherein the phase change material comprises a nano or micro thermal conducting material.

4. The thermal managing system for a battery pack as in claim 1, wherein the phase change material comprises a foamed metal.

5. The thermal managing system for a battery pack as in claim 1, wherein the container comprises a thermal conducting fin.

6. The thermal managing system for a battery pack as in claim 1, wherein the container comprises a metal shell.

7. The thermal managing system for a battery pack as in claim 1, wherein the container comprises a polymer capsule shell.

8. A thermal managing system for a battery pack, comprising:
a battery pack;
a first vapor chamber module, comprising a first evaporating surface and a first condensing surface, wherein the first evaporating surface is thermally connected to the battery pack, and a first two-phase flow heat transfer between the first evaporating surface and the first condensing surface occurs in one way, from the first evaporating surface to the first condensing surface;
a second vapor chamber module comprising a second evaporating surface and a second condensing surface, disposed in parallel to the first vapor chamber module to form a gap, wherein a second two-phase flow heat transfer between the second evaporating surface and the second condensing surface occurs in one way from the second evaporating surface to the second condensing surface;
a phase change material module, disposed in the gap, comprising a container and a phase change material, wherein the container is thermally connected to the first condensing surface and the second evaporating surface respectively, and contains the phase change material, wherein when a phase change occurs, the phase change material comprises a latent heat,
wherein when the phase change occurs, the phase change material receives the latent heat through the first two-phase flow heat transfer, and releases the latent heat through the second two-phase flow heat transfer.

9. A thermal managing system for a battery pack, comprising:
a battery pack;
a first vapor chamber module comprising a first evaporating surface and a first condensing surface, wherein the first evaporating surface is thermally connected to the battery pack, and a first two-phase flow heat transfer between the first evaporating surface and the first condensing surface occurs in one way from the first evaporating surface to the first condensing surface;
a second vapor chamber module comprising a second evaporating surface and a second condensing surface, disposed in parallel to the first vapor chamber module to form a gap, wherein a second two-phase flow heat transfer between the second evaporating surface and the second condensing surface occurs in one way from the second evaporating surface to the second condensing surface;
a first phase change material module, disposed in the gap, comprising a first container and a first phase change material, wherein the first container is thermally connected to the first condensing surface and the second evaporating surface respectively, and contains the first phase change material, wherein when a first phase change occurs, the first phase change material comprises a first latent heat;
a second phase change material module, comprising a second container and a second phase change material, wherein the second container is thermally connected to the second condensing surface, and contains the second phase change material, wherein when a second phase change occurs, the second phase change material comprises a second latent heat;
wherein the first phase change material comprises a first melting point, the second phase change material comprises a second melting point, and the first melting point is higher than the second melting point.

10. A thermal managing system for a battery pack, comprising:
a battery pack;
a first vapor chamber module, comprising a first evaporating surface and a first condensing surface, wherein the first evaporating surface is thermally connected to the battery pack, and a first two-phase flow heat transfer between the first evaporating surface and the first condensing surface occurs in one way from the first evaporating surface to the first condensing surface;
a second vapor chamber module, comprising a second evaporating surface and a second condensing surface, disposed in parallel to the first vapor chamber module to form a first gap, wherein a second two-phase flow heat transfer between the second evaporating surface and the second condensing surface occurs in one way from the second evaporating surface to the second condensing surface;
a third vapor chamber module, comprising a third evaporating surface and a third condensing surface, disposed in parallel to the second vapor chamber module to form a second gap, wherein a third two-phase flow heat transfer between the third evaporating surface and the third condensing surface occurs in one way from the second evaporating surface to the second condensing surface;
a first phase change material module, disposed in the gap, comprising a first container and a first phase change material, wherein the first container is thermally connected to the first condensing surface and the second evaporating surface respectively, and contains the first phase change material, wherein when a first phase change occurs, the first phase change material comprises a first latent heat;
a second phase change material module, comprising a second container and a second phase change material, wherein the second container is thermally connected to the second condensing surface and the third evaporating surface, and containing the second phase change material, wherein when a third phase change occurs, the third phase change material comprises a third latent heat,
wherein the first phase change material comprises a first melting point, the second phase change material comprises a second melting point, and the first melting point is higher than the second melting point.
